# EUROPEAN PATENT SPECIFICATION

(11) **EP 1 862 665 B1**
(45) Date of publication and mention of the grant of the patent: **30.12.2015**
(21) Application number: 07106297.0
(22) Date of filing: 17.04.2007
(51) Int. Cl.: F02M 37/00

(54) **Fuel pipe structure**
Brennstoffrohrstruktur
Structure de tuyau de carburant

(30) Priority: 31.05.2006 JP 2006151070
(43) Date of publication of application: 05.12.2007
(73) Proprietor: HONDA MOTOR CO., LTD., Tokyo 107-8556 (JP)
(72) Inventor: Seki, Yoshitaka, Saitama 351-0193 (JP)
(74) Representative: Rupp, Christian

(56) References cited:
- EP-A1- 1 351 007
- EP-A1- 1 369 634
- JP-A- H09 269 088
- JP-A- 2001 182 881
- JP-A- 2003 074 778
- US-A1- 2003 094 809
- US-A1- 2004 061 332
- US-A1- 2004 169 990

## Description

The present invention relates to a fuel pipe structure for connecting a fuel pump joint pipe to a fuel supply tube.

Some motorcycles have a fuel pump built into a fuel tank and a fuel supply tube connected to a joint pipe serving as a delivery port of the fuel pump. A quick connector may be used to connect the fuel supply tube to the joint pipe for easy connection and disconnection (see, for example, Patent Document 1).
[Patent Document 1]
   Japanese Patent Laid-open No. 2002-266724

Further, documents JP 2001 182 881 A1 and US 2003/094809 A1 disclose fuel pipe structures.

A conventional arrangement for the fuel tank in motorcycles includes a pivot about which a front portion of the fuel tank pivotally moves vertically relative to a vehicle body. The arrangement further allows an opening portion for maintenance services to be formed in the front portion of the fuel tank. Disadvantageously, however, consideration needs to be taken into account for prevention of interference of a connection between the joint pipe and the quick connector with other parts when the fuel tank is pivotally moved for performing maintenance service jobs.

The present invention has been made to solve the problem of the conventional art and it is an object of the present invention to provide a fuel pipe structure capable of protecting the connection during a maintenance service job performed easily.

The present invention provides a fuel pipe structure connecting a fuel pump joint pipe to a fuel supply tube with a quick connector. The fuel pipe structure includes a protective cover that covers at least a part of a connection between the joint pipe and the fuel supply tube. The protective cover includes a fitting portion that fits at least on either the joint pipe or the quick connector.
According to the above-described arrangement, mounting of the protective cover allows at least part of the connection to be protected during a maintenance service job. The mounting of the protective cover further eliminates the need for a screw or other fastening member.

The fitting portion of the protective cover may preferably be formed so as to achieve a fit only when the joint pipe is connected to the fuel supply tube.
According to the above-described arrangement, mounting of the protective cover allows not only part of the connection to be protected during a maintenance service job, but also the connection to be checked for a connected condition when the protective cover is to be mounted.

The protective cover may preferably include a structure that prevents the quick connector from being pulled off.
According to this arrangement, the connection can be prevented from being pulled off during a maintenance service job.

The protective cover further include a structure that prevents the quick connector from being rotated.
According to the invention, the quick connector is prevented from being rotated relative to the joint pipe during a maintenance service job.

According to the aspects of the present invention, the protective cover covers at least part of the connections between the joint pipe and the fuel supply tube. Accordingly, a maintenance service tool or the like can be prevented from interfering with the connection during a maintenance service job. The connection can therefore be prevented from being damaged. In addition, the protective cover can be mounted through a fit, eliminating the need for a screw or other fastening member for attaching the protective cover.
This makes for easy mounting procedures for the protective cover.

Moreover, if the protective cover can be fitted in position only when the joint pipe and the fuel supply tube are connected together, a complete connection between the joint pipe and the fuel supply tube can be visually checked by checking a fit of the protective cover.
If the protective cover is arranged to include a structure for preventing the quick connector from being pulled off, the structure prevents the quick connector from being pulled off.
Further, if the protective cover is arranged to include a structure for preventing the quick connector from being rotated, the structure prevents the quick connector from being rotated inside the protective cover.
Fig. 1 is a side elevational view showing a motorcycle having a fuel pipe structure according to an embodiment of the present invention.
Fig. 2 is an enlarged view showing a portion of a fuel tank shown in Fig. 1.
Fig. 3 is a view showing a condition of the fuel tank shown in Fig. 2 pivotally moved.
Fig. 4 is a side elevational view showing a condition, in which a fuel supply tube is connected to a fuel pump using the fuel pipe structure according to the embodiment of the present invention.
Fig. 5 is a view of Fig. 4 as seen from a lower side.
Figs. 6(a) and 6(b) are general views showing the fuel supply tube in a single part state not assembled in place.
Figs. 7(a) through 7(d) are views showing a protective cover in a single part state not assembled in place, Fig. 7(a) being a plan view showing the protective cover, Fig. 7(b) being a side cross-sectional view taken along line b-b of Fig. 7(a), Fig. 7(c) being a bottom view showing the protective cover, and Fig. 7(d) being a left side elevational view of Fig. 7(b).
Fig. 8(a) is a cross-sectional view taken along line B-B of Fig. 7(b) and Fig. 8(b) is a cross-sectional view taken along line C-C of Fig. 7(b).

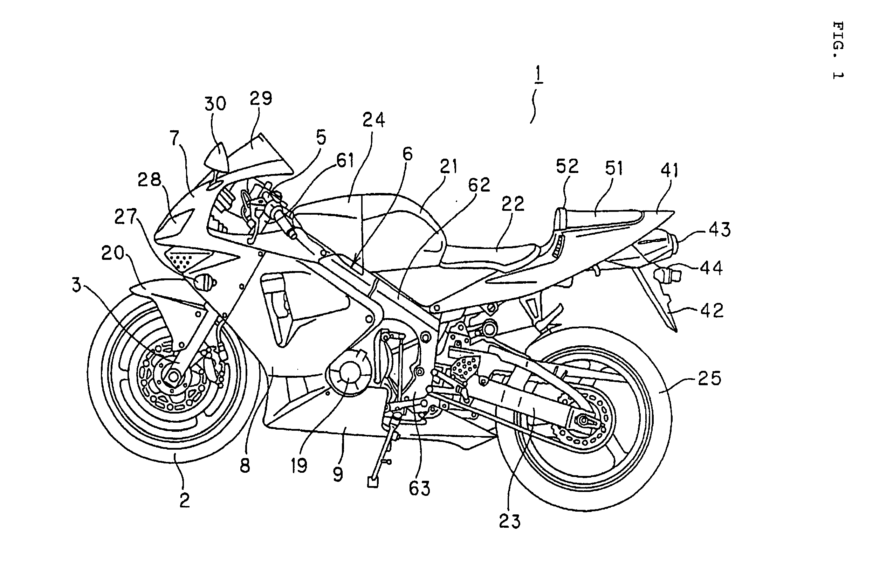

A fuel pipe structure according to a specific embodiment to which the present invention is applied will be described below with reference to the accompanying drawings. Fig. 1 is a schematic view showing a motorcycle having the fuel pipe structure according to the embodiment of the present invention. Throughout the descriptions given hereunder, a vertical direction and a fore-aft direction indicate a direction with reference to Fig. 1. A lateral direction is a direction as seen from a rider of the motorcycle.

Referring to Fig. 1, a motorcycle 1 includes a vehicle body frame 6. The vehicle body frame 6 includes a head pipe 61, a pair of left and right main frames 62, a pair of left and right pivot plates 63, and a cross member not shown. The main frames 62 extend obliquely downwardly and rearwardly from the head pipe 61. The pivot plates 63 are connected at the rear of the main frames 62. The cross member connects these pivot plates 63 mutually horizontally.

Referring to Fig. 1, a front fork 3 is rotatably connected to the head pipe 61 of the vehicle body frame 6. The front fork 3 includes a lower end portion, to which a front wheel 2 including a hydraulic disc brake is rotatably supported. A front fender 20 is disposed upward of the front wheel 2. The front fender 20 is mounted in such a mode as to be supported by the front fork 3. The front fork 3 further includes an upper end portion, to which a steering handlebar 5 is fitted.

A water-cooled, inline four-cylinder, transverse engine 19 is mounted on a lower side at a central portion of the vehicle body frame 6. A middle cowl 8 is disposed on each of both sides of the engine 19. The middle cowl 8 is removably mounted relative to a vehicle body in such a mode as to be continuous with an upper cowl 7. A two-lamp headlight 28, a windscreen 29, a pair of left and right front turn signal lamps 27, and a pair of left and right rearview mirrors 30 are mounted in the upper cowl 7.

A lower cowl 9 is disposed downward of the engine 19. The lower cowl 9 is removably mounted relative to the vehicle body in such a mode as to be continuous with the middle cowl 8. A fuel tank 21 is disposed upward of the engine 19 and on an upper side of the vehicle body frame 6. A front seat 22 is disposed rearward of the fuel tank 21. A half cover 24 is attached on a front side of the fuel tank 21. The half cover 24 covers an upper portion of a space on a front side of the fuel tank 21. A rear seat (pillion seat) 51 is mounted rearward of the front seat 22. A rear cowl 41 and a rear fender 42 are attached on a lower side of the rear seat 51. A stop lamp 43 and a pair of left and right rear turn signal lamps 44 are mounted in the rear fender 42.

Referring further to Fig. 1, a swing arm (rear fork) 23 is swingably supported at a lower portion rearward of the vehicle body frame 6. A chain-driven rear wheel 25 having a hydraulic brake is supported rotatably at a position downward of the rear fender 42 at a rear end portion of the swing arm 23.

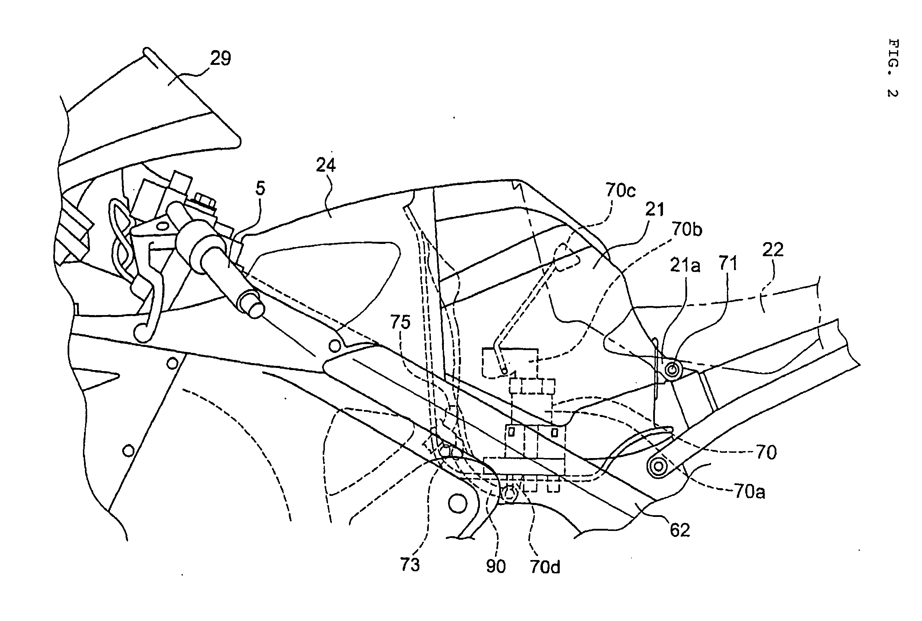

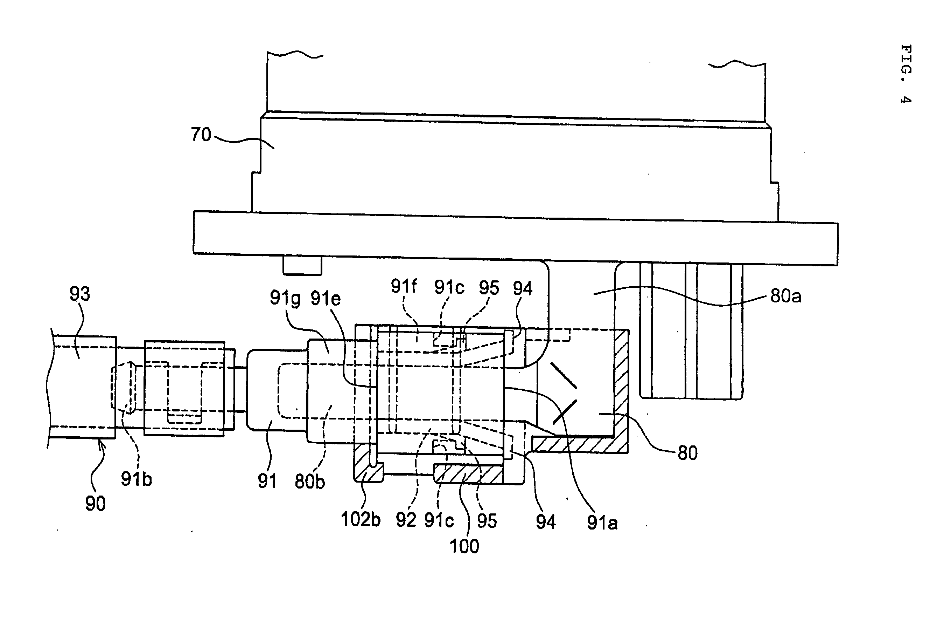

Fig. 2 is an enlarged view showing a mounting portion of the fuel tank 21 shown in Fig. 1.
A fuel pump 70 for delivering fuel in the fuel tank 21 is attached to a bottom surface of the fuel tank 21 with a bolt or other fastening member not shown. The fuel pump 70 includes a pump 70a, a filter 70b, a float switch 70c, and the like. The pump 70a delivers fuel to an outside of the fuel tank 21. The filter 70b filters fuel. The float switch 70c detects an amount of fuel still available for use left in the fuel tank 21. The pump 70a, the filter 70b, the float switch 70c, and the like are disposed inside the fuel tank 21. The fuel pump 70 further includes a delivery portion 70d disposed on an outside at a lower side of the fuel tank 21. The delivery portion 70d serves the purpose of discharging fuel delivered by the pump 70a. The delivery portion 70d includes a joint pipe 80 (see Fig. 4) to be described in detail later.

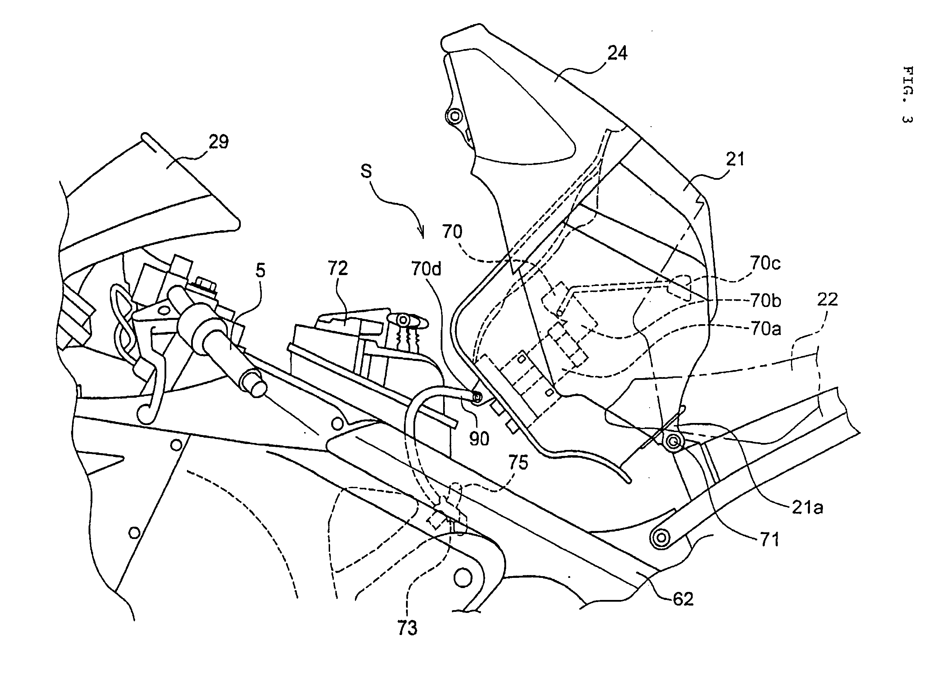

A side of a first end portion of a fuel supply tube 90 is connected to the delivery portion 70d of the fuel pump 70. A side of a second end portion of the fuel supply tube 90 is connected to a fuel pipe 73 connected to a throttle body side. The fuel pipe 73 is connected through a pipe 75 to an injector (or a carburetor) not shown. Through the abovementioned arrangement, fuel sent from the fuel tank 21 is mixed with air purified by an air cleaner 72 (see Fig. 3) by the injector and a resultant mixture is sent to the engine 19.

Fig. 3 is a view showing a condition of the fuel tank 21 shown in Fig. 2 pivotally moved about a pivot 71.
A pair of hinge plates 21a is disposed at a rear end portion of the fuel tank 21. The pair of hinge plates 21a protrudes rearwardly to the vehicle body, each of the pair being apart from each other in a vehicle width direction (in a depth direction relative to a paper surface of Fig. 3). The pivot 71 that extends in the vehicle width direction is disposed on a seat rail side of the vehicle body. The pair of hinge plates 21a of the fuel tank 21 is rotatably mounted about the pivot 71. A front portion of the fuel tank 21 is adapted to be raised upward. In addition, as shown in Fig. 3, raising the front portion of the fuel tank 21 allows the half cover 24 fitted to the fuel tank 21 and the fuel pump 70 incorporated in a bottom portion of the fuel tank 21 to be rotated about the pivot 71 with the fuel tank 21.

Referring further to Fig. 3, pivotally moving the front side of the fuel tank 21 will reveal an upper portion of the air cleaner 72, which is disposed so as to be hidden inside the half cover 24, in such a mode as to face the outside of the vehicle body. This, at the same time, forms a maintenance space S, in which a service technician can reach his or her hands, on a lower side of the half cover 24 and a lower portion of the fuel tank 21.
Further, the pivotal movement of the fuel tank 21 causes the fuel supply tube 90 to undergo elastic deformation in line with the position of the fuel tank 21, following a pivotally moved position of the fuel pump 70.

Fig. 4 is a side elevational view showing a condition, in which the fuel supply tube 90 is connected to the fuel pump 70 using the fuel pipe structure according to the embodiment of the present invention.

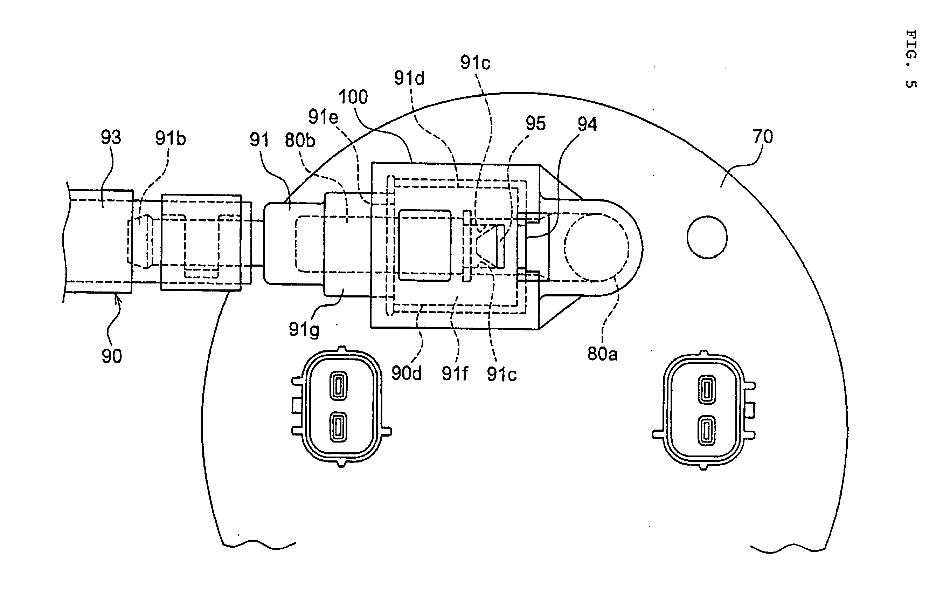

Fig. 5 is a view of Fig. 4 as seen from a lower side.

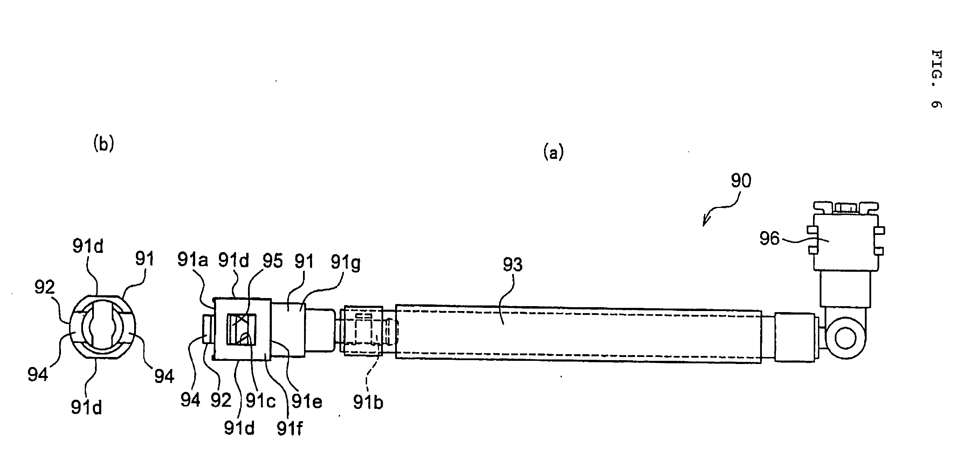

Figs. 6(a) and 6(b) are views showing the fuel supply tube 90 to be connected to the fuel pump 70 in a single part state not assembled in place.
Referring to Fig. 4, the joint pipe 80 formed into an L-shaped cylinder extends on the lower side of the fuel pump 70. The joint pipe 80 includes an extended portion 80a and a bent portion 80b. The extended portion 80a extends downwardly. The bent portion 80b extends sideways (to the left in Fig. 4) from a leading end portion of the extended portion 80a.

Referring to Figs. 4 and 5, the first end portion of the fuel supply tube 90 is connected to a leading end portion of the bent portion 80b.
Referring to Figs. 6(a) and 6(b), a quick connector 91 is fitted to the side of the first end portion of the fuel supply tube 90. The quick connector 91 includes a hole portion 91a formed on a side thereof to be connected to the bent portion 80b. A connector 92 is removably embedded in the hole portion 91a. An insertion pipe 91b, which is inserted into an inside of an inner pipe of a fuel tube 93, is formed on a side of the quick connector 91 to be connected to the fuel tube 93.

An outer peripheral surface of the quick connector 91 includes an engagement hole 91c, a shoulder portion 91e, and two planes 91d formed thereon.
Referring to Fig. 6(b), a second lock portion 95 of the connector 92 to be described later is adapted to be locked in the engagement hole 91c in a condition in which the connector 92 is fitted in the quick connector 91.
Referring to Fig. 6(a), the shoulder portion 91e includes two cylindrical column portions 91f, 91g of dissimilar diameters. The cylindrical column portions 91f, 91g are formed in such a mode as to be joined in series with each other about respective central axes centered correctly. The cylindrical column portion 91f on the side of the hole portion 91a has a diameter larger than that of the cylindrical column portion 91g on the side of the insertion pipe 91b.
The two planes 91d are formed such that each is disposed on an opposite side from each other across the central axis. The two planes 91d form what is called a width across flats.

The connector 92 serves to allow a leading end of the bent portion 80b of the joint pipe 80 to be connected to the quick connector 91 through a sequence of a single, simple operation. Referring to Fig. 4, the connector 92 includes first lock portions 94, 94 and the second lock portions 95, 95 that protrude in an outward direction. Each of the first lock portions 94, 94 and the second lock portions 95, 95 is formed on an opposite side from each other across the central axis.
The first lock portions 94, 94 are to be engaged with an edge portion of the hole portion 91a in the connector 92 with the connector 92 embedded in the quick connector 91. The second lock portions 95, 95, on the other hand, are to be engaged with an edge portion of the engagement hole 91c. The first lock portions 94, 94 and the second lock portions 95, 95, being engaged in position, prevent the connector 92 from being pulled off from the quick connector 91. In addition, the connector 92 is formed from an elastic material. The first lock portions 94, 94 are made to flex toward an axis of the connector 92 in the longitudinal direction. This disengages engagement of the first lock portions 94, 94 and the second lock portions 95, 95, allowing the connector 92 to be pulled off from the quick connector 91. To fit the quick connector 91 into the inside of the connector 92, the quick connector 91 is pushed into the inside of the connector 92. This makes the first lock portions 94, 94 flex toward the central axis, thus establishing a connection achieved through a sequence of a single, simple operation.

Through the arrangements as described above, fuel delivered from the fuel pump 70 flows through the joint pipe 80 and the quick connector 91 into the fuel tube 93 and discharged from a connector 96 on the side of the second end of the fuel supply tube 90.

Referring to Figs. 4 and 5, a protective cover 100 is fitted over a connection between the joint pipe 80, the quick connector 91, and the connector 92 after connections are made. The protective cover 100 is designed to be mounted by being pushed in onto these connections from below the fuel pump 70.

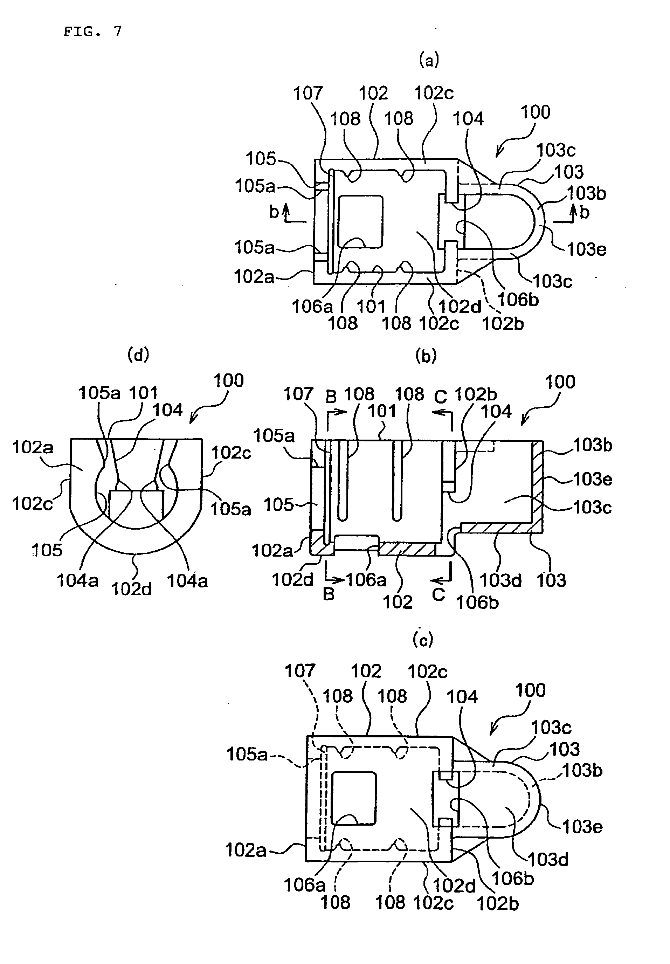

Figs. 7(a) through 7(d) are views showing the protective cover 100 in a single part state not assembled in place. Fig. 7(a) is a plan view showing the protective cover 100. Fig. 7(b) is a side cross-sectional view taken along line b-b of Fig. 7(a). Fig. 7(c) is a bottom view showing the protective cover 100.
Fig. 7(d) is a left side elevational view of Fig. 7(b).

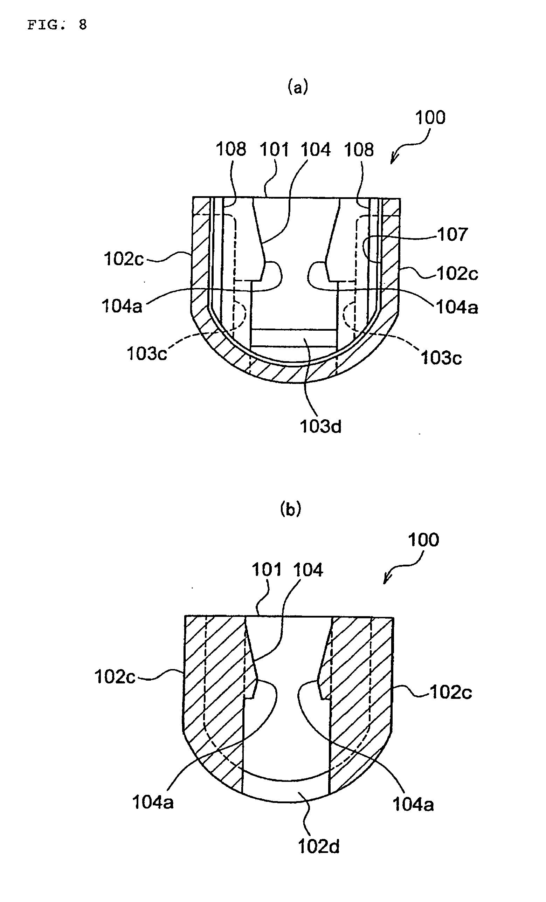

Fig. 8(a) is a cross-sectional view taken along line B-B of Fig. 7(b). Fig. 8(b) is a cross-sectional view taken along line C-C of Fig. 7(b). Fig. 7(b) shows the protective cover 100 as viewed in the same direction as in Fig. 4. In the following descriptions of the protective cover 100, the vertical and lateral directions are relative to Fig. 7(b).

The protective cover 100 is integrally molded from a plastic material into a hollow shape having an opening portion 101 on an upper side thereof as shown in Fig. 7(b). The protective cover 100 includes a first fitting portion 102 and a second fitting portion 103. The first fitting portion 102 (portion on the left in Figs. 7(a) to 7(c)) has a large internal space therein. The second fitting portion 103 (portion to the right of the first fitting portion 102 in Figs. 7(a) to 7(c)) has an internal space smaller than that of the first fitting portion 102. The internal space of the first fitting portion 102 and the internal space of the second fitting portion 103 are in communication with each other through a lock hole 104 to be described later.

In a condition in which the protective cover 100 is fitted to the connections, the quick connector 91 is designed to be accommodated in the internal space of the first fitting portion 102. Referring to Fig. 7(a), the first fitting portion 102 is formed into a substantially rectangular shape in a plan view. The internal space of the first fitting portion 102 is defined by being surrounded by a left side wall portion 102a, a right side wall portion 102b, side wall portions in a width direction 102c, and a bottom portion 102d. Referring to Fig. 7(d), the bottom portion 102d is formed into an arcuate shape protruding downwardly.

In the condition in which the protective cover 100 is fitted to the connections, the joint pipe 80 is designed to be accommodated in the internal space of the second fitting portion 103. Referring to Fig. 7(a), the second fitting portion 103 extends rightwardly from the right side wall portion 102b of the first fitting portion 102. The second fitting portion 103 has a right side end portion 103e formed into an arcuate shape in a plan view. The arcuate shape substantially coincides with an outside diameter shape of the extended portion 80a of the joint pipe 80. Referring to Fig. 7(a), the internal space of the second fitting portion 103 is defined by being surrounded by the right side wall portion 102b of the first fitting portion 102, a right side wall portion 103b, side wall portions in the width direction 103c, and a bottom portion 103d shown in Fig. 7(b). Referring to Fig. 8(a), the bottom portion 103d is shaped to form a horizontal plane.

The left side wall portion 102a of the first fitting portion 102 includes a mounting hole 105 formed therein. The mounting hole 105 extends downwardly from the opening portion 101. Referring to Fig. 7(d), the mounting hole 105 is constricted toward the center at a point downward of the opening portion 101 to form a constriction (fitting portion) 105a. The shape of a hole downward of the constriction 105a is a circle diameter to match an outside diameter shape of the cylindrical column portion 91g of the quick connector 91. A clearance in the constriction 105a has the minimum dimension that is smaller than the diameter of the cylindrical column portion 91g.

The right side wall portion 102b of the first fitting portion 102 includes the lock hole 104 formed therein as shown in Fig. 8(b). In the same manner as with the constriction (fitting portion) 105a, the lock hole 104 is constricted toward the center to form a constriction 104a. The shape of a hole downward of the constriction 104a is a rectangle that is slightly larger than the diameter of the bent portion 80b of the joint pipe 80. A clearance in the constriction 104a has the minimum dimension that is smaller than the diameter of the bent portion 80b.

The bottom portion 102d includes a rectangular check hole 106a formed therein. When the protective cover 100 is fitted in position, the connector 92 and the joint pipe 80 can be viewed as being present inside the protective cover 100 through this check hole 106a. The check hole 106a serves also as a lightening hole for weight reduction and material saving. Further, a portion extending from the bottom portion 102d of the first fitting portion 102 to the bottom portion 103d of the second fitting portion 103 includes a rectangular hole 106b formed therein. The rectangular hole 106b is formed so that the right side wall portion 102b and the lock hole 104 can be formed when the protective cover 100 is integrally molded.

Referring to Figs. 7(a) to 7(c), the first fitting portion 102 includes a groove portion 107 and ribs 108, 108 .. formed therein.
The ribs 108 are extended vertically along the side wall portions 102c as shown in Fig. 7(c). Referring to Fig. 7(a), two ribs 108 are formed on each of the side wall portions 102c on both sides. Each of the ribs 108 has a protruding end that opposes a protruding end of the rib 108 on the opposite side across the internal space. Spacing between the protruding ends of the two paired ribs 108 is slightly shorter than spacing between the planes 91d formed as the width across flats of the quick connector 91.

Effects of the fuel pipe structure according to the embodiment of the present invention will be described below.
The quick connector 91 is connected via the connector 92 to the bent portion 80b of the joint pipe 80. Thereafter, the protective cover 100 is fitted by being pushed in position from below the fuel pump 70. This results in the connections being accommodated in the internal space in the first fitting portion 102 and the second fitting portion 103 of the protective cover 100. More specifically, if the joint pipe 80 and the quick connector 91 are completely connected to each other, the shoulder portion 91e of the quick connector 91 stays inside the internal space of the first fitting portion 102. If the joint pipe 80 and the quick connector 91 are not completely connected to each other, the shoulder portion 91e does not stay inside the internal space, in which case the protective cover 100 cannot be fitted in place. Accordingly, by checking that the protective cover 100 is fitted in place, it is possible to recognize that the joint pipe 80 and the quick connector 91 are completely connected together.

When the protective cover 100 is to be mounted to the connections, the constriction 105a is abutted against the cylindrical column portion 91g of the quick connector 91 and, when the protective cover 100 is further pushed in, the cylindrical column portion 91g fits into the mounting hole 105. Similarly, the constriction 104a is abutted against the bent portion 80b of the joint pipe 80 and, when the protective cover 100 is further pushed in, the bent portion 80b fits into the lock hole 104. As a result, the protective cover 100 and the quick connector 91 and/or the joint pipe 80 are fitted together, so that the protective cover 100 is mounted in place.

If the fuel supply tube 90 is pulled in a longitudinal direction thereof with the protective cover 100 fitted in position, the shoulder portion 91e and the left side wall portion 102a are brought into contact with each other. Specifically, the shoulder portion 91e is positioned by the left side wall portion 102a, which allows the shoulder portion 91e to prevent the quick connector 91 from being pulled off.

When the protective cover 100 is mounted in position, the leading ends of the mutually opposing ribs 108, 108 clamp the width across flats 91d, 91d of the quick connector 91. The ribs 108, 108 thus prevent the quick connector 91 from being rotated inside the protective cover 100.
Moreover, when the protective cover 100 is mounted in position, the protective cover 100 substantially covers the connection between the joint pipe 80 and the quick connector 91, thereby protecting the connection.

According to the fuel pipe structure according to the embodiment of the present invention, the protective cover 100 is mounted such that the connections between the joint pipe 80, the quick connector 91, and the connector 92 are covered. Accordingly, a wrench or other maintenance service tool, or a part near the connections, is not likely to interfere with the abovementioned connections during a service job. As a result, the connections can be prevented from being damaged.

The protective cover 100 includes the constriction 105a disposed on the left side wall portion 102a, through which the cylindrical column portion 91g of the quick connector 91 is moved into the mounting hole 105. The constriction 105a has the minimum dimension smaller than the diameter of the cylindrical column portion 91g. A fit can therefore be achieved between the protective cover 100 and the quick connector 91 when mounted. As a result, the protective cover 100 does not require fastening members, such as a screw or the like, for mounting, which makes for easy mounting procedures.

Moreover, the protective cover 100 has the left side wall portion 102a included in the first fitting portion 102, and the quick connector 91 has the shoulder portion 91e. If an attempt is made to mount the protective cover 100 when there is an incomplete fit (connection) between the joint pipe 80 and the quick connector 91, a positional relationship is established between the left side wall portion 102a and the shoulder portion 91e such that the shoulder portion 91e is disposed outside the internal space of the first fitting portion 102 (which disables mounting of the protective cover 100). It is therefore possible to confirm a complete connection for the abovementioned connection by determining that the protective cover 100 is mounted correctly.

The mounting hole 105 in the left side wall portion 102a has an inside diameter smaller than the diameter of the shoulder portion 91e. If the fuel supply tube 90 is pulled in the longitudinal direction thereof, therefore, the shoulder portion 91e is caught by an edge portion of the mounting hole 105. Accordingly, the quick connector 91 can be prevented from being pulled off from the joint pipe 80. As a result, the service technician does not need to worry about the quick connector 91 being pulled off from the joint pipe 80, as he or she pivotally moves the fuel tank 21 or performs a maintenance service job.

Furthermore, the quick connector 91 includes the planes 91d serving as the width across flats and the protective cover 100 includes the opposing ribs 108, 108 formed on the side wall portions 102c. When the protective cover 100 is mounted in position, the opposing ribs 108, 108 are designed to clamp the planes 91d, 91d. This effectively prevents the quick connector 91 from being rotated inside the protective cover 100.
As a result, the protective cover 100 can be easily removed and reinstalled. It is also possible to achieve an even more solid fit between the protective cover 100 and the quick connector 91.

In accordance with the embodiment of the present invention, the protective cover 100 is mounted to the connection between the firs end side of the fuel supply tube 90 and the joint pipe 80. The protective cover 100 may similarly be disposed at the connection between the second end side of the fuel supply tube 90 and the fuel pipe 73. This allows the connections to be protected and checked, and prevents the quick connector 91 from being pulled off and rotated.

The embodiment of the present invention has been described with reference to the arrangements, in which the quick connector 91 is disposed on the side of the fuel supply tube 90 and connected to the joint pipe 80. The arrangements at the connections are not limited to this. For example, a receptacle connector may be disposed on the side of the joint pipe 80 for connection to the quick connector 91. An arrangement has also been described, in which the connector 92 is fitted inside the quick connector 91. The connector 92 is not, however, necessary as long as the fuel supply tube 90 can be properly connected to the joint pipe 80. As such, even with the connection arrangements modified as appropriately, covering the connections with the protective cover 100 allows the connections to be protected and checked, and prevents the quick connector 91 from being pulled off and rotated.
- 1:: Motorcycle
- 6:: Vehicle body frame
- 21:: Fuel tank
- 70:: Fuel pump
- 71:: Pivot
- 72:: Air cleaner
- 73:: Fuel pipe
- 80:: Joint pipe
- 90:: Fuel supply tube
- 91:: Quick connector
- 91a:: Hole portion
- 91b:: Insertion pipe
- 91c:: Engagement hole
- 91d:: Plane
- 91e:: Shoulder portion
- 92:: Connector
- 93:: Fuel tube
- 100:: Protective cover
- 101:: Opening portion
- 102:: First fitting portion
- 102a:: Left side wall portion
- 103:: Second fitting portion
- 104:: Lock hole
- 104a, 105a:: Constriction (fitting portion)
- 108:: Rib
- S:: Maintenance space

## Claims

1. A fuel pipe structure for a motorcycle connecting a fuel pump joint pipe (80) to a fuel supply tube (90) with a quick connector (91), the structure comprising:
a protective cover (100) covering at least a part of a connection between the joint pipe (80) and the fuel supply tube (90);
wherein the protective cover (100) includes a fitting portion (102, 103) fitting on and accommodating at least the joint pipe (80) and the quick connector (91);
an outer peripheral surface of the quick connector (91) includes two planes (91d) formed thereon; and
the protective cover (100) includes a structure designed to clamp the planes (91d) preventing the quick connector (91) from being rotated relative to the joint pipe (80), **characterised in that**
the protective cover (100) includes opposing ribs (108) formed on side wall portions (102c) for clamping the planes (91d).

2. The fuel pipe structure according to claim 1,
wherein the fitting portion of the protective cover (100) is formed so as to achieve a fit only when the joint pipe (80) is connected to the quick connector (91).

3. The fuel pipe structure according to any of the preceding claims,
wherein the protective cover (100) includes a structure preventing the quick connector (91) from being pulled off.

4. The fuel pipe structure according to any of the preceding claims,
wherein the fuel pump joint pipe (80) is formed into an L-shaped cylinder,
wherein the protective cover (100) substantially covers the connection between the joint pipe (80) and the quick connector (91) for protecting the connection and fits to the connection,
wherein the protective cover (100) includes a first fitting portion (102) and a second fitting portion (103), wherein the internal space of the first and second fitting portion (102, 103) are in communication with each other through a lock hole (104),
wherein the joint pipe (80) is designed to be accommodated in the internal space of the second fitting portion (103), and
wherein the second fitting portion (103) has a side end portion (103e) opposite the lock hole (104) formed into an arcuate shape in a plan view, wherein the arcuate shape substantially coincides with an outside diameter shape of an extended portion (80a) of the joint pipe (80).

5. The fuel pipe structure according to any of the preceding claims,
wherein spacing between protruding ends of the opposing ribs (108) is slightly shorter than spacing between the planes (91d) formed as a width across flats of the quick connector (91).

6. The fuel pipe structure according to any of the preceding claims, wherein the bottom portion (102d) of the protective cover (100) includes a preferably rectangular check-hole for viewing the connector (92) and the joint pipe (80) being present.

## Patentansprüche

1. Brennstoffleitungsstruktur für ein Motorrad, die eine Brennstoffpumpenverbindungsleitung (80) durch einen Schnellverbinder (91) mit einem Brennstoffzuführungsrohr (90) verbindet, wobei die Struktur aufweist:
eine Schutzabdeckung (100), die wenigstens einen Teil einer Verbindung zwischen der Verbindungsleitung (80) und dem Brennstoffzuführungsrohr (90) bedeckt;
wobei die Schutzabdeckung (100) einen Montageabschnitt (102, 103) umfasst, der wenigstens auf die Verbindungsleitung (80) und den Schnellverbinder (91) montiert wird und diese aufnimmt;
wobei eine Außenumfangsoberfläche des Schnellverbinders (91) zwei darauf ausgebildete Flächen (91d) umfasst; und
die Schutzabdeckung (100) eine Struktur umfasst, die konstruiert ist, um die Flächen (91d) festzuklemmen, wobei verhindert wird, dass der Schnellverbinder (91) relativ zu der Verbindungsleitung (80) gedreht wird, **dadurch gekennzeichnet, dass** die Schutzabdeckung (100) entgegengesetzte Rippen (108) umfasst, die auf Seitenwandabschnitten (102c) ausgebildet sind, um die Flächen (91d) festzuklemmen.

2. Brennstoffleitungsstruktur nach Anspruch 1,
wobei der Montageabschnitt der Schutzabdeckung (100) derart ausgebildet ist, dass eine Passung nur erreicht wird, wenn die Verbindungsleitung (80) mit dem Schnellverbinder (91) verbunden wird.

3. Brennstoffleitungsstruktur nach einem der vorhergehenden Ansprüche,
wobei der Schutzabdeckung (100) eine Struktur umfasst, die verhindert, dass der Schnellverbinder (91) abgezogen wird.

4. Brennstoffleitungsstruktur nach einem der vorhergehenden Ansprüche,
wobei die Brennstoffpumpenverbindungsleitung (80) zu einem L-förmigen Zylinder ausgebildet ist,
wobei die Schutzabdeckung (100) die Verbindung zwischen der Verbindungsleitung (80) und dem Schnellverbinder (91) zum Schutz der Verbindung im Wesentlichen bedeckt und auf die Verbindung passt,
wobei die Schutzabdeckung (100) einen ersten Montageabschnitt (102) und einen zweiten Montageabschnitt (103) umfasst, wobei der Innenraum des ersten und zweiten Montageabschnitts (102, 03) über ein Arretierloch (104) miteinander in Verbindung stehen,
wobei die Verbindungsleitung (80) konstruiert ist, um in dem Innenraum des zweiten Montageraums (103) aufgenommen zu werden, und
wobei der zweite Montageabschnitt (103) einen Seitenendabschnitt (103e) gegenüber dem Arretierloch (104) hat, der in einer Draufsicht zu einer gebogenen Form ausgebildet ist, wobei die gebogene Form im Wesentlichen mit einer Außendurchmesserform eines verlängerten Abschnitts (80a) der Verbindungsleitung (80) zusammenfällt.

5. Brennstoffleitungsstruktur nach einem der vorhergehenden Ansprüche,
wobei der Abstand zwischen vorstehenden Enden der gegenüberliegenden Rippen (108) ein wenig kürzer als der Abstand zwischen den Flächen (91d) ist, die als eine Breite über Ebenen des Schnellverbinders (91) ausgebildet sind.

6. Brennstoffleitungsstruktur nach einem der vorhergehenden Ansprüche, wobei der untere Abschnitt (102d) der Schutzabdeckung (100) ein vorzugsweise rechteckiges Kontrolloch umfasst, um zu sehen, dass der Verbinder (92) und die Verbindungsleitung (80) vorhanden sind.

## Revendications

1. Structure de tuyau de carburant pour un motocycle raccordant un tuyau de jointure de pompe à carburant (80) à un tube d'alimentation en carburant (90) avec un raccord rapide (91), la structure comprenant :
un couvercle de protection (100) couvrant au moins une partie d'un raccordement entre le tuyau de jointure (80) et le tube d'alimentation en carburant (90) ;
dans laquelle le couvercle de protection (100) inclut une partie ajustée (102, 103) ajustée sur au moins le tuyau de jointure (80) et le raccord rapide (91) et les logeant ;
une surface périphérique extérieure du raccord rapide (91) inclut deux plans (91d) formés dessus ; et
le couvercle de protection (100) inclut une structure conçue pour serrer les plans (91d) empêchant le raccord rapide (91) d'être tourné par rapport au tuyau de jointure (80), **caractérisée en ce que**
le couvercle de protection (100) inclut des nervures opposées (108) formées sur des parties de paroi latérale (102C) pour serrer les plans (91d).

2. Structure de tuyau de carburant selon la revendication 1,
dans laquelle la partie ajustée du couvercle de protection (100) est formée de sorte à atteindre un ajustement seulement lorsque le tuyau de jointure (80) est raccordé au raccord rapide (91).

3. Structure de tuyau de carburant selon l'une quelconque des revendications précédentes,
dans laquelle le couvercle de protection (100) inclut une structure empêchant le raccord rapide (91) d'être tiré.

4. Structure de tuyau de carburant selon l'une quelconque des revendications précédentes,
dans laquelle le tuyau de jointure de pompe à carburant (80) est formé dans un cylindre en L ;
dans laquelle le couvercle de protection (100) couvre sensiblement le raccordement entre le tuyau de jointure (80) et le raccord rapide (91) pour protéger le raccordement et s'ajuste sur le raccordement,
dans laquelle le couvercle de protection (100) inclut une première partie ajustée (102) et une seconde partie ajustée (103), dans laquelle l'espace interne de la première et de la seconde partie ajustée (102, 03) sont en communication l'un avec l'autre par un trou de verrouillage (104),
dans laquelle le tuyau de jointure (80) est conçu pour être logé dans l'espace interne de la seconde partie ajustée (103), et
dans laquelle la seconde partie ajustée (103) présente une partie d'extrémité latérale (103e) opposée au trou de verrouillage (104) formé en une forme arquée dans une vue en plan, dans laquelle la forme arquée coïncide sensiblement avec une forme de diamètre extérieur d'une partie étendue (80a) du tuyau de jointure (80).

5. Structure de tuyau de carburant selon l'une quelconque des revendications précédentes,
dans laquelle l'espacement entre des extrémités en saillie des nervures opposées (108) est légèrement plus court que l'espacement entre les plans (91d) formés comme une largeur sur des plats du raccord rapide (91).

6. Structure de tuyau de carburant selon l'une quelconque des revendications précédentes, dans laquelle la partie inférieure (102d) du couvercle de protection (100) inclut un trou de vérification de préférence rectangulaire pour voir la présence du raccord (92) et du tuyau de jointure (80).
